Europäisches Patentamt

European Patent Office

Office européen des brevets

(11) Publication number: **0 252 095 B1**

## EUROPEAN PATENT SPECIFICATION

(45) Date of publication of patent specification: 14.11.90

(51) Int. Cl.⁵: **H 02 P 7/288, G 05 F 1/613**

(21) Application number: 86907217.3

(22) Date of filing: 24.11.86

(86) International application number:
PCT/US86/02533

(87) International publication number:
WO 87/03753 18.06.87 Gazette 87/13

(54) D.C. MOTOR CONTROL SYSTEM.

(30) Priority: 16.12.85 US 809680

(43) Date of publication of application:
13.01.88 Bulletin 88/02

(45) Publication of the grant of the patent:
14.11.90 Bulletin 90/46

(84) Designated Contracting States:
DE FR GB

(56) References cited:
DE-A-3 342 031
US-A-4 015 182

Patent Abstracts of Japan, volume 8, no. 103
(E-244)(1540), 15 May 1984 & JP-A-5917894
IBM Technical Disclosure Bulletin, volume 9, no.
3, August 1966, (New York, US), W.T. Devine:
"Shunt current compensator", p. 337-338

(73) Proprietor: NCR CORPORATION
World Headquarters
Dayton, Ohio 45479 (US)

(72) Inventor: SINGH, Amar, Jit
1464 Granger Avenue
Escondido, CA 92027 (US)

(74) Representative: Robinson, Robert George
International Patent Department NCR Limited
206 Marylebone Road
London NW1 6LY (GB)

## Description

### Technical field

This invention relates to D.C. motor control systems of the kind including a D.C. power supply, control signal generating means adapted to generate a first control signal indicative fo a desired speed of said D.C. motor, and control means connected between said D.C. power supply and said D.C. motor and adapted to control the energization of said D.C. motor in dependence on said first control signal to drive said D.C. motor at said desired speed (see for example US—A—4015182).

The invention has a particular application where the D.C. motor is used to drive a fan which cools electronic equipment such as data processing equipment in an office environment.

### Background art

Electronic equipment, when in operation, generates heat, but generally speaking, the ambient environment accepts adequate amounts of that heat such that additional cooling is not required. When a low level of additional cooling is needed, passive devices such as heat sinks are the first alternative. As the need for additional cooling is increased more active means such as fans and circulating liquid coolants are used. A particular field of application for the present invention is in an office environment wherein fan motors are used to cool electronic equipment such as data processing equipment, particularly desk top computers, which because of their numbers and proximity to the office work staff cause, in turn, a fair amount of distracting audible noise. If a single speed fan motor is used in this type of equipment its speed is chosen to meet, for example, the worst case cooling conditions expected to be experienced in the office.

As the speed of a fan bears a somewhat direct relation to the amount of acoustical noise generated by it, it is highly desirable to use a variable speed motor to drive the fan, with the speed of the motor varying as a direct function of the ambient temperature. Therefore, with low temperatures, the fan runs slowly decreasing its noise generation and with high temperatures the fan runs at its maximum speed generating maximum noise. A problem is experienced with such usage due to the varying demand of the fan motor for current from the systems power supply causing voltage variations (electrical noise) to appear throughout the system serviced by the power supply, which variations, in turn, may cause malfunctions in the logic circuits of the associated computer.

A. D.C. motor control system of the kind specified is known from U.S. Patent No. 4,015,182. In this known D.C. motor control system, the D.C. motor drives a compressor for a refrigeration system. The D.C. motor is energized to drive the compressor at a selected speed corresponding to the desired temperature.

The document "IBM Technical Disclsoure Bulletin" Vol. 9, No. 3, W. T. Devine "Shunt Current Compensator" pp. 337—338 discloses a circuit which provides an overall constant impedance to A.C. supply terminals even if the load changes.

### Disclosure of the invention

It is the object of the present invention to provide a D.C. motor control system of the kind specified, which is of a simple construction, and wherein voltage variations in the power supply are minimized despite variations in the desired motor speed.

Therefore, according to the present invention, there is provided a D.C. motor control system of the kind specified, characterized by current sensing means adapted to sense the current applied to said D.C. motor and to develop a second control signal in dependence on the value of the sensed current, and compensating means coupled to said D.C. power supply and to said current sensing means and adapted, in response to said second control signal to draw a compensating current from said D.C. power supply which is such that the total current drawn from said D.C. power supply by said D.C. motor and said compensating means is maintained at a substantially constant level.

### Brief description of the drawings

One embodiment of the present invention will now be described by way of example, with reference to the accompanying drawings, in which:

Fig. 1 is a block diagram illustrating the basic functional components and their interrelationship for carrying out the concept of the invention.

Fig. 2 illustrates in detailed electrical schematic and block diagram form the preferred embodiment of the invention.

Fig. 3 is a chart depicting resultant load current as a function of time showing the mirror image and load current contributions.

Fig. 4 illustrates in detailed electrical schematic form a temperature sensitive controller which may be used in the preferred embodiment of the invention.

### Best mode for carrying out the invention

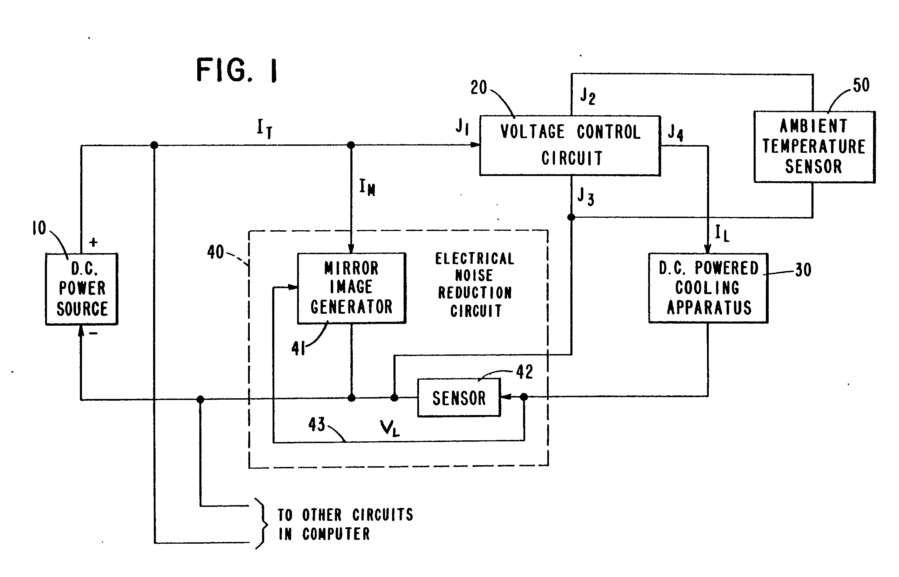

Referring to Fig. 1, a D.C. power source 10 is shown connected in circuit to provide power to a cooling apparatus 30 and to other circuits (not shown) contained within a device (not shown) serviced by the cooling apparatus. In the preferred embodiment of the invention the cooling apparatus is a D.C. fan and the device being serviced by the cooling apparatus is a desk top computer.

A voltage control circuit 20 connects the power supply 10 to the cooling apparatus 30 and operates to vary the D.C. voltage applied to the cooling apparatus as a function of the ambient temperature. An ambient temperature sensor 50 provides a signal, which signal may be generated with a thermistor, to the voltage control circuit 20 which signal represents the ambient temperature. The electrical noise reduction circuit 40 is comprised of a mirror image generator 41 and a current sensor 42.

In operation, as the voltage control circuit 20 responds to a change in the sensed ambient temperature it adjusts its output to increase or decrease the current, $I_L$, drawn by the cooling apparatus 30. If, as in the preferred embodiment of the invention, the cooling apparatus is a fan, then the speed of the fan motor will be somewhat a direct function of the amplitude of the voltage applied to it.

The current sensor 42 senses the current, $I_L$, and provides a voltage signal $V_L$ proportional to that current to the mirror image generator 41 over a conductor 43. The mirror image generator 41 causes a mirror image current $I_M$ to flow through its circuit and to combine, at its output, with the curent $I_L$. The combined currents, because of the mirror relationship of $I_M$ to $I_L$, always sum to the same value, thereby, causing the current $I_T$, from the D.C. power source 10, to remain substantially constant and noise free.

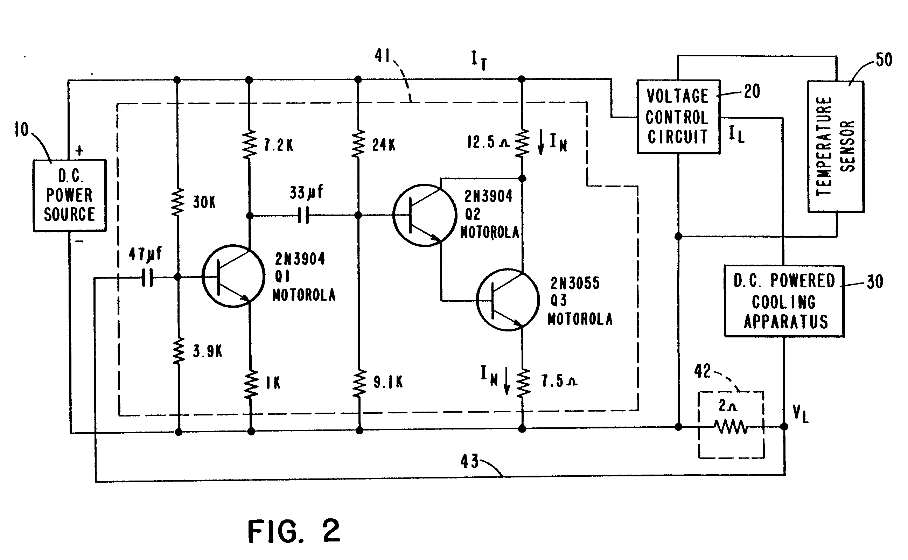

Referring now to Fig. 2, wherein one specific embodiment of the mirror image generator 41 and current sensor 42 are shown, the current sensor 42 may be a 2 ohm resistor for developing the voltage $V_L$ as a function of the current $I_L$ flowing through the resistor. The conductor 43 couples the voltage $V_L$ to the mirror image generator 41 and more specifically to a 47 microfarad capacitor. An NPN transistor, $Q_1$, which may be of the type manufactured by Motorola under their Part No. 2N3904, is biased by a 30 K ohm and a 3.9 K ohm resistor connecting the + side of the power source and the return side, respectively, to its base. The collector of transistor $Q_1$ is connected by a 7.2 K ohm resistor to the + side of the power source. The emitter of transistor $Q_1$ is connected to the return side of the power source by a 1 K resistor.

A pair of NPN transistors $Q_2$ and $Q_3$, connected in a Darlington circuit configuration, control the flow of the mirror current $I_M$. The current $I_M$ flows in response to the signal variations coupled from the collector of transistor $Q_1$ to the base of transistor $Q_2$ by a 33 microfarad capacitor. A 24 K ohm resistor and a 9.1 K ohm resistor, connected to the base of transistor $Q_2$ and the + side and the return side, respectively, of the power supply are used to develop base bias for transistor $Q_2$. A 12.5 ohm resistor and a 7.5 ohm resistor connect the collector of transistor $Q_3$ to the + side of the power source and the emitter of transistor $Q_2$ to the return side of the power source, respectively, to control the operating range of the Darlington pair.

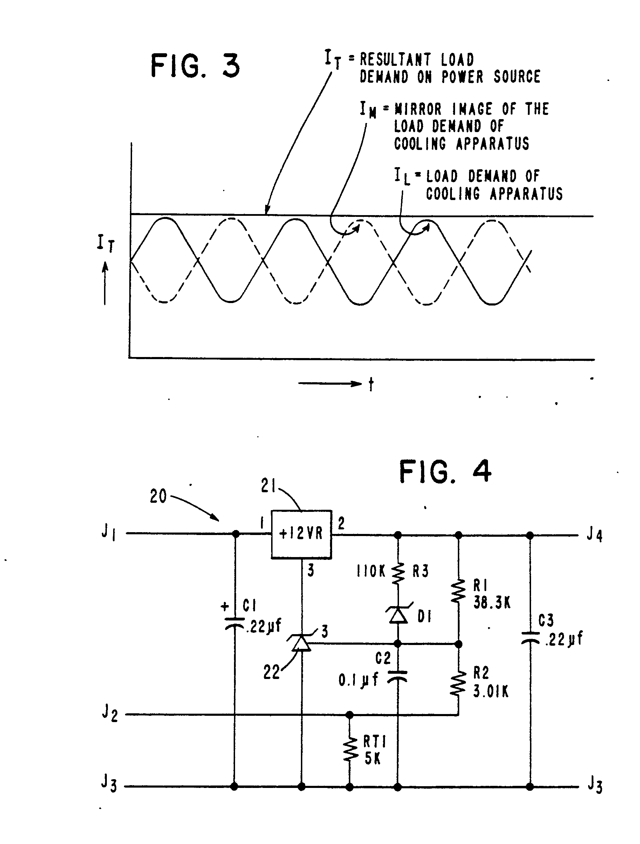

Fig. 3 illustrates the current flows, $I_T$, $I_M$, and $I_L$, as waveforms occurring over a time period t to provide a graphic example of how the resultant load current $I_T$ is maintained at a constant level by the use of a mirror current $I_M$. For the example chosen the demand for, and the flow of the D.C. load current $I_L$, fluctuates in a sinusoidal fashion. The mirror current $I_M$, is shown as a dotted line equivalent of $I_L$ but shifted in phase by 1800 such that the combination of the two currents always averages out to a constant level $I_T$. The resultant current $I_T$ thus remains at a constant regardless of the level of current flow $I_L$ through the load.

Referring now to Fig. 4, the voltage control circuit 20 is connected by conductor J1 to the + side of the power supply 10, by conductor J2 to the ambient temperature sensor 50, by conductor J3 to the negative, or return side of the power source 10, and by the conductor J4 to the cooling apparatus 30. The 12 volt regulator 21 is a fixed voltage regulator which receives on its input, labelled 1, the + power supply voltage and which provides on its output, labelled 2, a voltage the level of which is controlled by the voltage level of the signal on its control input, labelled 3. Regulator 21 may be of the type manufactured by Motorola as part of their MC7800 series. A programmable precision reference device 22, which may be a device of the type manufactured by Texas Instruments under Part No. TL-431, is connected between the control input to regulator 21 and the return side of the power supply. The programmable device 22 in conjunction with the temperature sensor 50, a Zener diode $D_1$ and a resistor R3 comprise a closed loop circuit. The diode $D_1$ is a 14 1/2 volt Zener diode.

In operation, at very low temperatures the output voltage appearing on conductor J4, to the cooling apparatus, is clamped to a minimum value based on the characteristics of the devices, 21 and 22. As the temperature increases the voltage on the conductor J2 increases, in turn causing the voltage developed at the junction of resistors $R_1$ and $R_2$ to increase. That voltage is coupled to the input labelled 3 on the programmable device 22, which in turn causes an increase in the voltage appearing at the output 2 of the voltage regulator 21. If the voltage across the resistor $R_1$ exceeds 14 1/2 volts the Zener diode $D_1$ conducts placing $R_3$ in parallel with $R_1$ to reduce the voltage appearing at the output 2 of the voltage regulator 21. The three capacitors are used to remove high frequency components from the otherwise D.C. signals.

## Claims

1. A D.C. motor control system, including a D.C. power supply (10), control signal generating means (50) adapted to generate a first control signal ($J_2$) indicative of a desired speed of said D.C. motor (30), and control means (20) connected between said D.C. power supply (10) and said D.C. motor (30) and adapted to control the energization ($I_L$) of said D.C. motor (30) in dependence on said first control signal to drive said D.C. motor at said desired speed, characterized by current sensing means (42) adapted to sense the current ($I_L$) applied to said D.C. motor (30) and to develop a second control signal ($V_L$) in dependence on the value of the sensed current, and compensating means (41) coupled to said D.C. power supply (10) and to said current sensing means (42) and adapted, in response to said second control signal to draw a compensating current (I$_M$) from said D.C. power supply (10) which is such that the total current (I$_T$) drawn from said D.C. power supply by said D.C. motor (30) and said compensating means (41) is maintained at a substantially constant level.

2. A D.C. motor control system according to claim 1, characterized in that said compensating means (41) includes transistor means (Q1) responsive to said second control signal (V$_L$) to develop a third control signal, and current load means (Q2, Q3) connected across said D.C. power supply (10) and responsive to said third control signal to cause said compensating current (I$_M$) to be drawn from said D.C. power supply (10).

3. A D.C. motor control system according to claim 2, characterized in that said transistor means includes a first transistor (Q1) having its base connected via a first capacitor to receive said second control signal (V$_L$), and its collector connected via a second capacitor to develop said third control signal.

4. A D.C. motor control system according to claim 3, characterized in that said current load means includes second and third transistors (Q2, Q3) connected in Darlington configuration, wherein the base of said second transistor (Q2) is arranged to receive said third control signal, the emitter of said second transistor (Q2) is connected to the base of said third transistor, the collectors of said second and third transistors are connected in commonm via a first resistor to a first terminal of said D.C. power supply (10) and the emitter of said third transistor (Q3) is connected via a second resistor to a second terminal of said D.C. power supply (10).

**Patentansprüche**

1. Ein Gleichstrommotor-Regelsystem mit einer Gleichstromversorgung (10), einer Regelsignalerzeugungsvorrichtung (50), die geeignet ist, ein erstes Regelsignal (J$_2$) zu erzeugen, das eine Solldrehzahl des Gleichstrommotors (30) angibt, und einer Regelvorrichtung (20), die zwischen die Gleichstromversorgung (10) und den Gleichstrommotor (30) geschaltet und geeignet ist, die Erregung (I$_L$) des Gleichstrommotors (30) abhängig von dem ersten Regelsignal zu regeln, um den Gleichstrommotor mit der genannten Solldrehzahl anzutreiben, gekennzeichnet durch eine Strom-(I$_L$)-Abfühlvorrichtung (42), die geeignet ist, den am Gleichstrommotor (30) angelegten Strom abzufühlen und eine zweites Regelsignal (V$_L$) abhängig von dem Wert des abgefühlten Stromes zu entwickeln, und eine Kompensationsvorrichtung (41), die mit der Gleichstromversorgung (10) und der Stromabfühlvorrichtung (42) gekoppelt und geeignet ist, unter Ansprechen auf das zweite Regelsignal einen kompensierenden Strom (I$_M$) aus der Gleichstromversorgung (10) zu ziehen, der derart iste, daß der vom Gleichstrommotor (30) und der Kompensationsvorrichtung (41) aus der Gleichstromversorgung gezo-

gene Gesamtstrom (I$_T$) auf einem im wesentlichen konstanten Pegel gehalten wird.

2. Ein Gleichstrommotor-Regelsystem nach Anspruch 1, dadurch gekennzeichnet, daß die Kompensationsvorrichtung (41) eine Transistorvorrichtung (Q1), die auf das zweite Regelsignal (V$_L$) zur Entwicklung eines dritten Regelsignals anspricht, und Stromlastvorrichtungen (Q2, Q3) aufweist, die über die Gleichstromversorgung (10) geschaltet sind und auf das dritte Regelsignal ansprechen, um zu bewirken, daß der kompensierende Strom (I$_M$) aus der Gleichstromversorgung (10) gezogen wird.

3. Ein Gleichstrommotor-Regelsystem nach Anspruch 2, dadurch gekennzeichnet, daß die Transistorvorrichtung einen ersten Transistor (Q1) aufweist, dessen Basis über einen ersten Kondensator zum Empfang des zweiten Regelsignals (V$_L$) geschaltet ist und dessen Kollektor über einen zweiten Kondensator zur Entwicklung des dritten Regelsignals geschaltet ist.

4. Ein Gleichstrommotor-Regelsystem nach Anspruch 3, dadurch gekennzeichnet, daß die Stromlastvorrichtungen einen zweiten und dritten Transistor (Q2, Q3) aufweisen, die in Darlington-Konfiguration geschaltet sind, wobei die Basis des zweiten Transistors (Q2) angeordnet ist, um das dritte Regelsignal zu empfangen, der Emitter des zweiten Transistors (Q2) mit der Basis des dritten Transistors verbunden ist, die Kollektoren des zweiten und dritten Transistors zusammen über einen ersten Widerstand mit einer ersten Klemme der Gleichstromversorgung (10) und der Emitter des dritten Transistors (Q3) über einen zweiten Widerstand mit einer zweiten Klemme der Gleichstromversorgung (10) verbunden sind.

**Revendications**

1. Système de commande d'un moteur à courant continu, comprenant une alimentation (10) en énergie à courant continu, des moyens (50) de génération d'un signal de commande conçus pour générer un premier signal de commande (J$_2$) indicatif d'une vitesse souhaitée dudit moteur (30) à courant continu, et des moyens de commande (20) connectés entre ladite alimentation (10) en énergie à courant continu et ledit moteur (30) à courant continu et conçus pour commander l'excitation (I$_L$) dudit moteur (30) à courant continu en dépendance dudit premier signal de commande pour entraîner ledit moteur à courant continu à ladite vitesse souhaitée, caractérisé par des moyens (42) de détection de courant (I$_L$) conçus pour détecter le courant appliqué audit moteur (30) à courant continu et pour développer un second signal de commande (V$_L$) en dépendance de la valeur du courant détecté, et des moyens de compensation (41) couplés à ladite alimentation (10) en énergie à courant continu et auxdits moyens (42) de détection de courant et conçus, en réponse audit second signal de commande, pour tirer de ladite alimentation (10) en énergie à courant continu un courant de compensation ($I_M$) qui est tel que le courant total ($I_T$) tiré de ladite alimentation en énergie à courant continu par ledit moteur (30) à courant continu et lesdits moyens de compensation (41) est maintenu à un niveau sensiblement constant.

2. Système de commande d'un moteur à courant continu selon la revendication 1, caractérisé en ce que lesdits moyens de compensation (41) comprennent un moyen à transistor (Q1) qui, en réponse audit deuxième signal de commande ($V_L$), développe un troisième signal de commande, et des moyens de charge de courant (Q2, Q3) connectés aux bornes de ladite alimentation (10) en énergie à courant continu et qui, en réponse audit troisième signal de commande, amènent ledit courant de compensation ($I_M$) à être tiré de ladite alimentation (10) en énergie à courant continu.

3. Système de commande d'un moteur à courant continu selon la revendication 2, caractérisé en ce que ledit moyen à transistor comprend un premier transistor (Q1) dont la base est connectée par l'intermédiaire d'un premier condensateur de façon à recevoir ledit deuxième signal de commande ($V_L$), et dont le collecteur est connecté par l'intermédiaire d'un second condensateur de façon à développer ledit troisième signal de commande.

4. Système de commande d'un moteur à courant continu selon la revendication 3, caractérisé en ce que lesdits moyens de charge de courant comprennent des deuxième et troisième transistors (Q2, Q3) montés en une configuration Darlington, dans laquelle la base dudit deuxième transistor (Q2) est agencée pour recevoir ledit troisième signal de commande, l'émetteur dudit deuxième transistor (Q2) est connecté à la base dudit troisième transistor, les collecteurs desdits deuxième et troisième transistors sont connectés en commun par l'intermédiaire d'une première résistance à une première borne de ladite alimentation (10) en énergie à courant continu, et l'émetteur dudit troisième transistor (Q3) est connecté par l'intermédiaire d'une seconde résistance à une seconde borne de ladite alimentation (10) en énergie à courant continu.

# FIG. I

VOLTAGE CONTROL CIRCUIT — 20

$J_2$

AMBIENT TEMPERATURE SENSOR — 50

$I_T$

$J_1$

$J_4$

$I_M$

$J_3$

$I_L$

10 — D.C. POWER SOURCE

+

−

40 — ELECTRICAL NOISE REDUCTION CIRCUIT

MIRROR IMAGE GENERATOR

41

D.C. POWERED COOLING APPARATUS — 30

SENSOR — 42

43

$V_L$

TO OTHER CIRCUITS IN COMPUTER

EP 0 252 095 B1

FIG. 2

# FIG. 3

$I_T$ = RESULTANT LOAD
DEMAND ON POWER SOURCE

$I_M$ = MIRROR IMAGE OF THE
LOAD DEMAND OF
COOLING APPARATUS

$I_L$ = LOAD DEMAND OF
COOLING APPARATUS

# FIG. 4

3